# DEMANDE DE BREVET EUROPEEN

(11) **EP 0 974 949 A1**
(43) Date de publication de la demande: **26.01.2000**
(21) Numéro de dépôt: 99420170.5
(22) Date de dépôt: 22.07.1999
(51) Int. Cl.: G09F 3/00, G09F 3/02, C09K 11/67, D06H 1/00

(54) **Procédé de fabrication d'articles textiles tissés ou brodés, du type étiquettes, rubans, écussons, integrant un dispositif anti-contrefaçon, et les produits obtenus selon le procédé**

(30) Priorité: 23.07.1998 FR 9809590
(71) Demandeur: Neyret Frères et Cie (Sarl), 42000 Saint Etienne (FR)
(72) Inventeur: Iacconi, Philibert, 06108 Nice (FR); Guilhot, Bernard, 42100 Saint Etienne (FR); Neyret, Bruno, 42000 Saint Etienne (FR); Grosseau, Philippe, 42100 Saint Etienne (FR)
(74) Mandataire: Dupuis, François

(57) **Abrégé**

Ce procédé est remarquable **en ce que** la fabrication de l'article (1) tissé ou brodé inclut une phase opératoire consistant à introduire, sur tout ou partie de l'article tissé ou brodé, un produit (4) ayant les caractéristiques d'être luminophore avec des particularités propres permettant d'établir une spécificité de l'article tissé ou brodé, lui conférant une signature propre à être détectée, mesurée et analysée selon des critères et moyens scientifiques permettant d'établir une courbe de thermoluminescence,
et en ce que l'irradiation du produit ne s'effectue que lors de l'expertise du produit permettant une conservation des caractéristiques du produit traité en toutes circonstances jusqu'à la phase d'expertise

## Description

L'invention se rattache au secteur technique des articles textiles tissés ou brodés, ainsi qu'aux moyens de contrôle et d'identification de l'authenticité de l'origine des produits.

La création artistique trouve des débouchés et applications multiples dans le domaine des produits textiles tissés ou brodés, notamment dans la conception de dessins, motifs, effets de toute nature, ce qui caractérise une industrie où l'innovation et la création sont une constante pour répondre aux goûts et aux besoins des consommateurs. Cette recherche est coûteuse en utilisant de plus en plus des moyens techniques sophistiqués. La durée de vie des produits ou des créations est plus courte de par un phénomène d'accélération des collections. Dès que celles-ci sont présentées au public, les délais pour le développement des copies serviles ou parasitaires sont très courts, et on ne peut malheureusement que constater le développement de cette contrefaçon créant de graves préjudices aux créateurs et aux fabricants.

Pour remédier à cette situation, différentes recherches ont été menées afin d'introduire dans les produits tissés ou brodés notamment, des moyens permettant d'identifier des produits d'origine ou des produits contrefaisants et garantissant l'identité du produit d'origine.

Plusieurs orientations ont ainsi été proposées. Par exemple, certains créateurs fabricants ont introduit, dans l'article tissé ou brodé du type étiquette ou ruban, un défaut de fabrication volontaire, mais peu visible pour le consommateur. Le procédé n'empêche pas la contrefaçon exacte de la marque ou des modèles et produits pour un contrefacteur attentif et minutieux.

D'autres techniques ont été développées consistant à introduire dans l'article tissé ou brodé, tel qu'étiquette ou ruban, des éléments tels qu'hologrammes, ou encore des fils imprégnés ou greffés à base de terres rares, ou de protéines ou d'autres produits qui se révèlent soit par exposition à certains rayonnements, soit un révélateur approprié. Ces procédés ont permis de rendre la contrefaçon plus difficile, mais n'ont pas enrayé celle-ci, car certains contrefacteurs ont utilisé des moyens techniques encore plus élaborés pour poursuivre leur pratique délictueuse.

La difficulté en effet réside dans le fait qu'il est difficile de détecter certaines copies qui sont très proches des produits d'origine.

Face à cette situation, la démarche du Demandeur pour préserver ses propres produits et créations a été de s'orienter sur une nouvelle recherche de moyens permettant de détecter d'une manière scientifique et incontestable une éventuelle contrefaçon sans qu'il y ait une quelconque incertitude sur son existence.

Pour cela, la démarche a été de personnaliser chaque produit textile ou brodé du type étiquettes, rubans ou écussons par exemple, en lui attribuant une signature parmi une combinaison infinie de signatures, à la manière des gènes où chaque ADN a un code génétique qui lui est propre et exclusif.

Ainsi, le Demandeur a recherché une solution technique qui permette d'attribuer à chaque produit tissé ou brodé un code qui puisse être traduit d'une manière scientifique et technique et pouvant être analysé par comparaison scientifique avec les produits pouvant constituer des contrefaçons et permettre l'identification incontestable de celles-ci.

Les recherches en l'égard de tels objectifs ont permis de développer un procédé de fabrication d'articles textiles tissés ou brodés dans les applications des étiquettes, rubans, broderies et produits similaires, particulièrement original en répondant aux besoins de la lutte contre la contrefaçon.

Selon l'art antérieur applicable à d'autres produits tel que mobilier, on connaît par le brevet français 2611064 un procédé de marquage d'objets par micro-cristaux à effets de mémoire. Ce procédé s'applique essentiellement à du mobilier, tableaux, statuettes, objets céramiques.

Le procédé décrit dans ce brevet préconise d'irradier les micro-cristaux avant de les fixer sur le support, puis lors de leur authentification de prélever quelques micro-cristaux et de lire leur thermo-luminescence . Ceci sous entend obligatoirement que le signal emmagasiné lors de l'irradiation soit toujours présent et qu'il n'ait pas été effecé par chauffage ou modifié par irradiation. Par ailleurs, aucune précision n'est donnée sur la façon dont on fixe les cristaux.

En pratique, le procédé décrit dans ce brevet n'est pas du tout applicable aux produits textiles et en particulier aux étiquettes, rubans, écussons, apposés sur des vêtements.

En effet, le repassage de vêtements et donc des étiquettes, rubans écussons, entraînerait par la mise en oeuvre du procédé selon le brevet 2611064 l'effacage et disparition totale d'une partie de la courbe de thermo-luminescence jusqu'à la température de repassage, rendant ainsi très aléatoire les mesures effectuées.

Le procédé selon l'invention s'applique aux étiquettes, rubans, écussons, dans une mise en oeuvre particulière propre à ces produits sans qu'il y ait de gêne dans le traitement desdits produits en phase normale d'utilisation.

Par ailleurs, ainsi qu'exposé dans le brevet français 2611064 les micro cristaux sont dopés préalablement à l'aide de terres rares et métaux de transitions, et nécessitant une opération de traitement spécifique renchérissant les coûts d'utilisation.

Dans l'application des étiquettes, rubans, écussons, il n'est pas envisageable d'avoir des surcouts par rapport à la nature des produits concernés et les conditions du marché.

Ainsi les connaissances suggérées par le brevet français 26111064 ne s'appliquent pas directement au domaine textile et en particulier les rubans, étiquettes écussons, qui sont soumises à des contraintes d'utilisation et d'entretien quasi quotidiennes radicalement différentes de celles du mobilier en général selon le brevet 2611064 précité.

Selon l'invention, le procédé de fabrication dans son application aux articles textiles ou brodés du type étiquettes, rubans, écussons et similaires, est caractérisé en ce que la fabrication de l'article tissé ou brodé inclut une phase opératoire consistant à introduire, sur tout ou partie de l'article tissé ou brodé, un produit ayant les caractéristiques d'être luminophore avec des particularités propres permettant d'établir une spécificité de l'article tissé ou brodé, lui conférant une signature propre à être détectée, mesurée et analysée selon des critères et moyens scientifiques permettant d'établir une courbe de thermoluminescence, et en ce que l'irradiation du produit ne s'effectue que lors de l'expertise du produit permettant une conservation des caractéristiques du produit traité en toutes circonstances jusqu'à la phase d'expertise.

Selon une autre caractéristique de l'invention, le procédé de fabrication d'articles textiles tissés ou brodés est remarquable en ce que le ou les produits luminophores, qui sont destinés à être introduits dans tout ou partie du ou des articles, sont mémorisés préalablement dans une banque de données pour l'identification de leur signature correspondant à leur caractéristiques, puis le ou les produits luminophores sont introduits dans les articles textiles qui sont ainsi signés.

Selon une autre caractéristique de l'invention, le contrôle de l'originalité de l'article textile tissé ou brodé s'effectue par l'établissement de la ou des courbes de thermoluminescence du ou des articles textiles tissés ou brodés pouvant incorporer ou non des produits luminophores, et à comparer les résultats obtenus par rapport aux enregistrements préalables des caractéristiques et courbes de thermoluminescence des produits luminophores incorporés dans le ou les articles textiles tissés ou brodés d'origine.

Ces caractéristiques et d'autres encore ressortiront bien de la suite de la description.

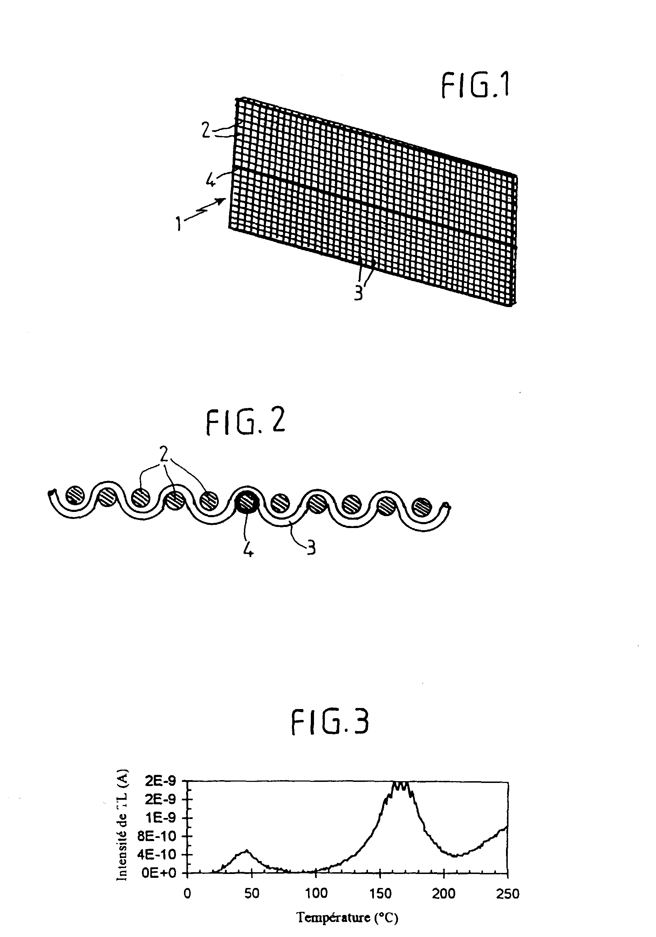

On a représenté figure 1 un article textile du type étiquette incluant un fil luminophore.

On a représenté figure 2 l'étiquette selon la figure 1 en coupe selon la ligne A-A.

La figure 3 est un exemple d'une courbe thermoluminescence établie à partir d'une étiquette incluant un produit luminophore permettant de comprendre l'intérêt et les avantages de l'invention.

Le procédé de fabrication d'articles textiles tissés ou brodés s'applique non limitativement à des étiquettes, rubans, écussons et tous produits similaires. Les caractéristiques de ces articles, et en particulier leur armure, le nombre de fils de chaîne et de trame, les caractéristiques de ces fils, l'introduction ou non de fils élastiques ou non élastiques, et d'une manière générale, leurs caractéristiques constitutives, sont quelconques. Les dessins qui peuvent être établis sur ces articles sont également quelconques.

Le procédé de l'invention vise à introduire dans tout ou partie de l'article (1) tissé ou brodé, un ou des produits luminophores permettant de donner à chaque article une signature unique.

L'article textile peut ainsi être imprégné d'un ou des produits luminophores dans son intégralité, ou en variante, seulement un ou plusieurs fils de chaîne (2) et/ou de trame (3) peuvent être imprégnés avec des produits luminophores (4).
Ce ou ces produits luminophores sont par exemple de l'oxyde de zirconium, de l'alumine, du zircon, de l'oxyde de zinc, de l'oxy-nitrure d'aluminium ou tout autre solide minéral ayant cette propriété.

Le ou les produits luminophores peuvent être à l'état unitaire à partir d'une seule matière, ou être une combinaison par adjonction, mélange de plusieurs produits de base luminophores.

Ce ou ces produits peuvent constituer eux-mêmes un ou des fils faisant fonction de fil de chaîne, ou de trame, et/ou de chaîne et de trame.

Les fils peuvent être à l'état naturel luminophores ou ils peuvent être utilisés comme un revêtement ou un enrobage d'un fil support textile de toute nature.

Selon l'invention, le ou les fils ayant les propriétés luminophores ou le revêtement en lui-même sont identifiés et stockés dans une base de données pour être archivés et constitués comme preuve d'origine de l'article textile du type étiquette, écusson, ruban.

On décrit maintenant la fabrication du ou des produits luminophores. Ce ou ces derniers sont préparés par une calcination sous oxygène à une température de 1400° C environ, pendant une période de quelques heures, en fonction de la nature du ou des produits. Ceux-ci sont ensuite dilués dans un solvant approprié, par exemple de l'éthanol, afin d'obtenir une viscosité propre à l'emploi.

La phase suivante consiste :
- soit à imprégner des produits luminophores un ou des fils qui seront par la suite incorporés par tissage ou broderie dans l'article textile du type étiquette, écusson, ruban ou tissus ;
- soit à procéder à l'enduction de l'article textile, étiquette, ruban, écusson à l'état fini ;
- soit à travailler le ou les produits luminophores pour leur donner la consistance d'un ou de fils destinés à être introduits avec les autres fils de l'article.

Les caractéristiques du ou des produits luminophores, en nature et en épaisseur, sont appropriés en fonction des besoins et des applications.

L'enregistrement de l'article textile, étiquette, ruban, écusson, s'effectue alors en faisant apparaître la ou les courbes de thermoluminescence propres aux produits incorporés dans l'article. Pour ce faire, on procède à une irradiation de l'article par des rayonnements ionisants (X, g ou b) à une température donnée, puis on chauffe progressivement et on enregistre l'émission luminescente propre aux produits incorporés en fonction de la température au moyen de photomultiplicateur ou de toute autre détecteur de photons. L'élévation de température peut être obtenue depuis -196°C sur un porte échantillon refroidi par circulation d'azote liquide (ou depuis la température ambiante) et peut être poursuivie au besoin jusqu'à calcination du support textile, si nécessaire jusqu'à 700°C. On obtient ainsi une courbe dans laquelle la position des pics de thermoluminescence ainsi que leur intensité correspondent à une certitude absolue à la signature du produit. Parallèlement à la thermoluminescence, on peut enregistrer l'émission exoelectronique thermostimulée des produits incorporés à l'article textile. Pour ce faire, on irradie et on chauffe le prélèvement de textile marqué exactement comme ci-dessus mais, à l'aide d'un détecteur approprié agissant en multiplicateur d'électrons, on compte les électrons émis en fonction de la température. On obtient une courbe d'émission exoelectronique thermostimulée dont les pics et l'intensité correspondent également à la signature du produit.

Le détecteur d'électrons pourra être par exemple un multiplicateur tubulaire d'électrons, une galette microcanaux, un compteur multipointe à flux de méthane, ou tout autre détecteur approprié.

Ainsi selon l'invention, l'irradiation du produit ne s'effectue que lors de l'expertise dudit produit permettant la conservation de ses caractéristiques en toute circonstance jusqu'à ladite phase d'expertise. En d'autres termes, il n'y a pas d'effacement, de détérioration, de la courbe de thermoluminescence dudit produit lors de son usage quotidien et de son entretien normal.

On a ainsi représenté figure 3 un exemple de courbe de thermoluminescence réalisée sur une étiquette à partir d'une irradiation de rayons X de 303GY, le chauffage étant effectué en pression à pression atmosphérique.

Comme indiqué précédemment, l'ensemble de ces courbes sont stockées et archivées dans une banque de données et il est ensuite facile et aisé de procéder, à partir d'échantillons du tissus pouvant être prêtés à contestation sur leur origine, à leurs examens scientifiques correspondant.

Les avantages ressortent bien de l'invention.

## Revendications

1. Procédé de fabrication dans son application aux articles textiles tissés ou brodés, du type étiquettes, rubans, écussons, intégrant un dispositif anti-contrefaçon, **caractérisé en ce que** la fabrication de l'article (1) tissé ou brodé inclut une phase opératoire consistant à introduire, sur tout ou partie de l'article tissé ou brodé, un produit (4) ayant les caractéristiques d'être luminophore avec des particularités propres permettant d'établir une spécificité de l'article tissé ou brodé, lui conférant une signature propre à être détectée, mesurée et analysée selon des critères et moyens scientifiques permettant d'établir une courbe de thermoluminescence,
et en ce que l'irradiation du produit ne s'effectue que lors de l'expertise du produit permettant une conservation des caractéristiques du produit traité en toutes circonstances jusqu'à la phase d'expertise

2. Procédé selon la revendication 1, **caractérisé en ce que** le ou les produits luminophores, qui sont destinés à être introduits dans tout ou partie du ou des articles, sont mémorisés préalablement dans une banque de données pour l'identification de leur signature correspondant à leur caractéristiques, puis le ou les produits luminophores sont introduits dans les articles textiles qui sont ainsi signés.

3. Procédé selon la revendication 2, **caractérisé en ce que** le contrôle de l'originalité de l'article textile tissé ou brodé s'effectue par l'établissement de la ou des courbes de thermoluminescence du ou des articles textiles tissés ou brodés pouvant incorporer ou non des produits luminophores, et à comparer les résultats obtenus par rapport aux enregistrements préalables des caractéristiques et courbes de thermoluminescence des produits incorporés dans le ou les articles textiles tissés ou brodés d'origine.

4. Procédé selon l'une quelconque des revendications 1 à 3, **caractérisé en ce que** les produits luminophores sont choisis à partir de familles du type oxyde de zirconium, alumine, zircon, oxyde de zinc, oxy-nitrure d'aluminium ou tout solide minéral présentant cette propriété.

5. Procédé selon l'une quelconque des revendications 1 à 4, **caractérisé en ce que** le ou les produits luminophores sont préparés par une calcination sous oxygène à une température de 1400° C environ, pendant une période de quelques heures, en fonction de la nature du ou des produits, **en ce qu**'ils sont ensuite dilués dans un solvant approprié, du type éthanol, afin d'obtenir une viscosité propre à l'emploi, et **en ce que** la phase suivante consiste :
- soit à imprégner des produits luminophores un ou des fils qui seront par la suite incorporés par tissage ou broderie dans l'article textile du type étiquette, écusson, ruban ou tissus ;
- soit à procéder à l'enduction de l'article textile, étiquette, ruban, écusson à l'état fini ;
- soit à travailler le ou les produits luminophores pour leur donner la consistance d'un ou de fils destinés à être introduits avec les autres fils de l'article.

6. Procédé selon l'une quelconque des revendications 1 à 5, **caractérisé en ce que** l'enregistrement de l'article textile, étiquette, ruban, écusson, s'effectue en faisant apparaître la ou les courbes de thermoluminescence propres aux produits incorporés dans l'article,
**et en ce qu'**on procède à une irradiation de l'article par des rayonnements ionisants (X, g ou b) à une température donnée, puis on chauffe progressivement et on enregistre l'émission luminescente propre aux produits incorporés en fonction de la température au moyen de photomultiplicateur ou de toute autre détecteur de photons,
**et en ce que** l'élévation de température peut être obtenue depuis -196°C sur un porte échantillon refroidi par circulation d'azote liquide (ou depuis la température ambiante) et peut être poursuivie au besoin jusqu'à calcination du support textile, si nécessaire jusqu'à 700°C.
**et en ce qu**'on obtient ainsi une courbe dans laquelle la position des pics de thermoluminescence ainsi que leur intensité correspondent à une certitude absolue à la signature du produit.

7. Procédé selon la revendication 6, caractérisé en ce que parallèlement à la thermoluminescence, on enregistre l'émission exoélectronique thermostimulée des produits incorporés à l'article textile, en procédant à l'irradiation et au chauffage du prélèvement de textile marqué à l'aide d'un détecteur approprié agissant en multiplicateur d'électrons,
**et en ce qu**'on compte les électrons émis en fonction de la température.
Et en ce qu'on obtient une courbe d'émission exoelectronique thermostimulée dont les pics et l'intensité correspondent à la signature du produit.

8. Articles textiles tissés ou brodés du type étiquettes, rubans, écussons comprenant des fils de chaîne (2) et de trame (3), dans la mise en oeuvre du procédé selon les revendications 1 à 7, **caractérisé en ce qu**'ils comprennent au moins un fil présentant un enrobage de produit luminophore (4).

9. Articles textiles tissés ou brodés du type étiquettes, rubans, écussons comprenant des fils de chaîne (2) et de trame (3), dans la mise en oeuvre du procédé selon les revendications 1 à 7, **caractérisé en ce qu'**ils sont imprégnés de produits luminophores (4).

10. Articles textiles tissés ou brodés du type étiquettes, rubans, écussons comprenant des fils de chaîne (2) et de trame (3), ), dans la mise en oeuvre du procédé selon les revendications 1 à 7, **caractérisé en ce qu**'ils comprennent au moins un fil obtenu directement à partir d'un produit luminophore.

11. Articles textiles selon l'une quelconque des revendications 8 , 9 et 10 **caractérisé en ce que** les produits luminophores sont du type oxyde de zirconium, alumine, zircon, oxyde de zinc, oxy-nitrure d'aluminium ou tout solide minéral présentant cette propriété.
